Europäisches Patentamt

(19) European Patent Office

Office européen des brevets

(11) Numéro de publication: **0 149 864**

**A1**

(12) # DEMANDE DE BREVET EUROPEEN

(21) Numéro de dépôt: **84201770.9**

(22) Date de dépôt: **30.11.84**

(51) Int. Cl.⁴: **A 01 N 25/10**
**A 01 N 35/02**

(30) Priorité: **12.12.83 FR 8319984**

(43) Date de publication de la demande:
**31.07.85 Bulletin 85/31**

(84) Etats contractants désignés:
**AT BE CH DE FR GB IT LI NL SE**

(71) Demandeur: **SOLVAY & Cie (Société Anonyme)**
**Rue du Prince Albert, 33**
**B-1050 Bruxelles(BE)**

(72) Inventeur: **Gago, Ignace**
**Chaussée de Nivelles 53**
**B-1420 Braine-l'Alleud(BE)**

(72) Inventeur: **Detroz, René**
**Chaussée de Louvain 534**
**B-1328 Ohain(BE)**

(54) **Compositions molluscicides et procédés pour leur obtention et leur utilisation.**

(57) Les compositions contiennent un agent molluscicide et un polyester.

Elles sont obtenues par enrobage de l'agent mollusci-cide, éventuellement en présence d'un support solide, au moyen d'une solution du polyester dans un solvant organi-que ou au moyen du polyester à l'état liquide ou fondu.

Les compositions conviennent pour l'épandage sur des surfaces infestées par des mollusques.

EP 0 149 864 A1

Croydon Printing Company Ltd.

-1-

## Compositions molluscicides et procédés pour leur obtention et leur utilisation

Cas S.83/31

SOLVAY & Cie (Société Anonyme)

La présente invention concerne des compositions molluscicides. Elle concerne également des procédés pour leur obtention et leur utilisation.

Certains mollusques sont connus pour être des prédateurs des plantes ou des hôtes intermédiaires de parasites des animaux ou de l'homme. Ainsi les limaces causent des dégâts aux plantes qui sont particulièrement fréquents et graves sur les semis précoces. Les gastéropodes des familles des Planorbes et des Limnées servent d'hôtes intermédiaires aux trématodes tels que les schistosoma qui sont les responsables des bilharzioses de l'homme et des animaux, et les douves qui sont responsables de maladies biliaires du mouton, des bovidés et de l'homme.

Pour lutter contre les mollusques, on fait appel à divers molluscicides dont le métaldéhyde. Les compositions à base de métaldéhyde qui sont disponibles commercialement se présentent sous la forme de particules solides que l'on épand sur la surface à traiter. Ces compositions doivent en général être ingérées par les mollusques ou être mises en contact direct avec eux pour pouvoir exercer pleinement leur effet molluscicide. Il est donc utile que le constituant actif demeure au sein de la particule. Or ces particules se délitent rapidement en présence d'eau ou d'humidité et du fait de la solubilité et de l'instabilité dans l'eau de leur principe actif, elles perdent rapidement leur activité et leur effet attractif. En outre, du fait de la volatilité non négligeable du métaldéhyde, les particules perdent également leur efficacité lors des stockages de longue durée. Enfin, il est fréquent que le métaldéhyde se décompose lors du stockage pour donner des produits inactifs.

-2-

La présente invention vise à procurer des compositions molluscicides sous forme de particules solides qui ne présentent pas les inconvénients des compositions connues. Elle vise à procurer des particules solides molluscicides faciles à fabriquer qui sont stables, qui conservent leur activité au cours du stockage et qui ne se délitent pas facilement en présence d'humidité ou d'eau. Les particules selon l'invention sont toxiques pour les mollusques de tous types et plus particulièrement pour les gastéropodes tels que les limaces et les gastéropodes qui servent d'hôtes intermédiaires à certains parasites de l'homme et des animaux. Dans les particules selon l'invention, les agents molluscicides ne sont pas libérés de manière importante une fois que les particules sont épandues sur la surface à traiter. De ce fait, les particules conservent leur pouvoir molluscicide après l'épandage pendant des périodes suffisamment longues et elles sont encore très efficaces même si elles ne sont consommées que tardivement par les mollusques qu'elles visent à détruire.

Les particules selon l'invention ne présentent pas une toxicité aiguë par contact pour les utilisateurs. Elles peuvent dès lors être mises en oeuvre sans qu'il soit nécessaire de prendre des précautions spéciales pour les manipuler. Les particules selon l'invention ne sont en outre pas phytotoxiques.

Les particules selon l'invention peuvent enfin être obtenues sous forme de granulés sans devoir recourir à de l'eau pour la granulation ce qui permet de simplifier la production.

L'invention concerne des compositions molluscicides sous forme de particules solides qui contiennent au moins un agent molluscicide et au moins un polyester.

Les polyesters sont de préférence choisis parmi ceux qui ont une température de fusion basse.

Par polyesters dont la température de fusion est basse, on entend désigner ceux dont la température de fusion ne dépasse pas 100°C et de préférence pas 80°C.

En général, les polyesters sont choisis parmi les polyesters dont la température de fusion est inférieure à 80°C.

0149864

-3-

Les meilleurs résultats sont obtenus avec les polyesters dont la température de début de fusion est d'au moins 25°C, le plus souvent d'au moins 30°C et de préférence d'au moins 40°C.

Divers types de polyesters conviennent. Les polyesters peuvent être des homopolymères ou des copolymères. En général les polyesters sont choisis parmi les homo- et co-polymères de lactones telles que la ε-caprolactone et de la δ-valérolactone. Le plus souvent ils sont choisis parmi les homo- et co-polymères de la ε-caprolactone.

Les copolymères de lactones peuvent contenir divers types d'unités comonomériques. En général il s'agit de copolymères d'une lactone avec un oxyde d'oléfine tel que l'oxyde d'éthylène ou l'oxyde de propylène, avec un lactame tel que le caprolactame, avec une autre lactone, ou encore avec un mélange d'un glycol tel que l'éthylène glycol et d'un diacide carboxylique de préférence acyclique tel que l'acide adipique. Les copolymères de lactones peuvent contenir des quantités variables d'unités monomériques dérivées de la lactone. En général, ils contiennent au moins 10 % et le plus souvent au moins 20 % de leur poids d'unités monomériques dérivées de la lactone. Cette proportion ne dépasse le plus souvent pas 95 % et de préférence pas 90 % du poids du polymère.

Les polyesters du type homopolymères conviennent bien. Parmi ceux-ci, les homopolymères de lactones conviennent particulièrement bien. Les homopolymères de la ε-caprolactone ont donné d'excellents résultats.

Les polyesters selon l'invention peuvent avoir des masses molaires moyennes variables. En général leur masse molaire moyenne est d'au moins 300 et le plus souvent d'au moins 500. En général leur masse molaire moyenne ne dépasse pas 100 000 et le plus souvent pas 80 000. D'excellents résultats ont été obtenus avec des polymères de masse molaire moyenne d'environ 800 à environ 50 000.

Les doses de polyesters dans les compositions en particules selon l'invention sont variables. En général la dose de polyesters est d'au moins 0,01 et de préférence d'au moins 0,1 % du poids de particules. En général elle ne dépasse pas 90 % et de préférence pas 70 % du poids des particules.

-4-

Les agents molluscicides peuvent être de types divers. On peut ainsi les choisir parmi des produits tels que le métaldéhyde, les carbamates et plus particulièrement le methiocarb (3,5-diméthyl-4-(méthylthio)phénylméthylcarbamate), le pesticide ISOLAN (marque déposée) (1-isopropyl-3-méthylpyrrazol-5-yl N,N-diméthylcarbamate) et le pesticide ZECTRAN (marque déposée) (4-diméthylamino-3,5-diméthylphenyl N-méthylcarbamate), les organophosphorés et plus particulièrement l'Azinophosméthyl, les dérivés de métaux tels que le cuivre, le zinc et l'étain et plus particulièrement le sulfate de cuivre, le diméthylthiocarbamate de cuivre, le bis(diméthyldithio-carbamate) de zinc, l'hydroxyde de triphénylétain, l'acétate de triphénylétain et les trialkylétains, la N-tritylmorpholine, les dinitrophénols et plus particulièrement le 4,6-dinitro-2-méthylphénol et le 4,6-dinitro-2-cyclohexylphénol, les amides et plus particulièrement le niclosamide ou ses sels, les halogénoacétamides et les nicotinanilides ou les halogénophénates et plus particulièrement le pentachlorphénate de sodium et le 2,5-dichloro-4-bromophénate de sodium.

On obtient de bons résultats avec le métaldéhyde seul ou en mélange avec au moins un autre molluscicide pouvant être choisi parmi les produits molluscicides précités.

Des compositions molluscicides en particules convenant bien pour des applications terrestres contiennent du métaldéhyde comme seul agent molluscicide; elles peuvent également contenir un mélange de métaldéhyde avec au moins un autre agent molluscicide tel qu'un carbamate. De bons résultats sont obtenus avec une composition contenant un mélange de métaldéhyde et de methiocarb.

Pour des applications aquatiques, on peut utiliser des compositions en particules contenant du métaldéhyde comme seul agent molluscicide; on peut également utiliser des compositions contenant un mélange de métaldéhyde avec au moins un autre agent molluscicide tel que le niclosamide ou un de ses sels ou encore la N-tritylmorpholine.

Les doses d'agents molluscicides dans les compositions en particules selon l'invention sont variables. En général, la dose

0149864

-5-

d'agents molluscicides est d'au moins 0,01 et de préférence d'au moins 0,1 % du poids des particules. En général, elle ne dépasse pas 70 et le plus souvent pas 60 % du poids des particules sans que ces limites ne soient critiques.

Les compositions en particules selon l'invention peuvent en outre contenir au moins un support solide. Ce support se présente le plus souvent sous la forme de particules ayant en général une granulométrie telle qu'elle passe au travers d'un tamis de 10 et de préférence de 20 mesh (U.S.Standard). Les dimensions exactes du support solide dépendent de la taille des mollusques auxquels les compositions selon l'invention sont destinées. Lorsqu'il s'agit de mollusques dont la taille est inférieure à 1 cm, la granulométrie du support est en général telle qu'il passe au travers d'un tamis de 170 et de préférence de 325 mesh. On peut utiliser des supports solides de type organique ou minéral. En général, on utilise des supports solides de type organique. Le plus souvent les supports solides sont choisis parmi ceux qui peuvent être ingérés et assimilés par les mollusques. De bons résultats ont été obtenus avec des supports choisis parmi les farines et les sons de diverses céréales. Les farines de blé ou de maïs et les sons de blé, éventuellement broyés conviennent bien.

Les doses de support solide dans les compositions en particules selon l'invention sont variables. En général, la dose de support solide est d'au moins 0,1 et de préférence d'au moins 1 % du poids des particules. En général, elle ne dépasse pas 95 % et le plus souvent pas 90 % du poids des particules.

Les particules selon l'invention peuvent également contenir d'autres additifs. Elles peuvent ainsi contenir des appâts pour les mollusques, des répulsifs pour les autres animaux et notamment pour les poissons s'il s'agit d'une composition molluscicide destinée à une application aquatique ou pour les mammifères s'il s'agit d'une composition molluscicide destinée à une application terrestre et des agents liants.

Comme appâts pour mollusques, on peut utiliser divers produits tels que le métaldéhyde, de la farine de poisson, de la caséine, du glucose, du sucrose, des extraits de salade, de la salade en poudre, du malt, des germes de blé, de la pâte de blé ou des extraits de coeur. Le métaldéhyde convient bien.

Lorsque les compositions en particules selon l'invention contiennent d'autres additifs, ceux-ci peuvent être présents à des doses variables ne dépassant en général pas 50 % et de préférence pas 20 % du poids des particules. Leur dose est en général d'au moins 0,01 et de préférence d'au moins 0,1 % du poids des particules.

Des compositions en particules particulièrement avantageuses peuvent contenir de 0,1 à 60 % en poids d'agents molluscicides et plus particulièrement de métaldéhyde seul ou en mélange avec un autre agent molluscicide tel que le methiocarb, de 0,1 à 70 % en poids de polyester et plus particulièrement d'un polymère de l'ε-caprolactone et de 1 à 90 % en poids d'un support solide et plus particulièrement d'une farine ou d'un son de céréales.

Dans les compositions en particules selon l'invention, les agents molluscicides, éventuellement mélangés avec, ou adsorbés sur, un support solide, ou mélangés avec les autres additifs, sont en général enrobés par un agent d'enrobage qui contient les polyesters. Dans ces particules, l'agent d'enrobage peut constituer une couche continue ou non disposée autour de la particule dont le coeur contient au moins un agent molluscicide et, éventuellement un support solide, mais il peut aussi servir de liant d'agglomération de particules fines élémentaires. Dans ce cas, chacune des particules fines élémentaires contenant l'agent molluscicide et éventuellement un support solide est entourée d'une couche continue ou non d'agent d'enrobage.

L'agent d'enrobage peut éventuellement contenir d'autres constituants tels que des liants. En général l'agent d'enrobage contient au moins 80 % et de préférence au moins 90 % de polyesters selon l'invention.

Les compositions en particules selon l'invention peuvent avoir des dimensions très variables. Leur diamètre est en général supérieur à 0,01 mm. Le plus souvent, il est compris en 0,01 et 50 mm. Comme il a été dit précédemment, les particules peuvent se présenter soit sous forme de granules dont la couche extérieure contient un agent d'enrobage contenant les polyesters, soit sous forme d'agglomérats de particules fines élémentaires liées entre elles par l'agent d'enrobage contenant les polyesters. Ces agglomérats peuvent avoir des formes quelconques telles que celles de pastilles, de tablettes et de comprimés.

La présente invention concerne également un procédé pour la fabrication des compositions en particules selon l'invention.

Les compositions selon l'invention peuvent avantageusement être obtenues en enrobant l'agent molluscicide sous forme solide avec le polyester soit à l'état liquide ou fondu soit sous forme de solution. De manière avantageuse on incorpore simultanément à la composition un support solide et les autres additifs éventuels.

En général, l'agent molluscicide, éventuellement sous forme d'une solution de préférence concentrée dans un solvant tel que l'eau ou un solvant organique, est mélangé avec le support solide en particules pour former un mélange solide.

L'enrobage de ce mélange solide peut être réalisé selon diverses techniques. Le polyester peut être mis en oeuvre tel quel à l'état liquide ou fondu ou sous forme de solution dans un solvant organique.

Le mélange solide peut être traité au moyen du polyester à l'état liquide ou fondu ou sous forme de solution dans un solvant organique dans divers types d'appareils connus en eux-mêmes et convenant pour l'enrobage ou le mélange. Des granulateurs comme les tambours rotatifs, les soles tournantes, etc. ou des broyeurs-mélangeurs tels que des mixers, etc. ou encore des mélangeurs tels que des mélangeurs à bras, etc. peuvent ainsi convenir.

Une technique particulière consiste à traiter, dans un appareil de types précités, le mélange solide par le polyester à l'état liquide ou fondu et, si nécessaire, à ajouter les autres additifs. Le polyester est en général préchauffé de manière à le rendre fluide en général à une température comprise entre sa température de fusion et une température légèrement supérieure à celle-ci, le plus souvent à une température comprise entre la température de fusion et cette température plus 20°C. La pâte chaude obtenue est ensuite envoyée dans un granulateur ou tout autre appareil susceptible de fabriquer des granules.

Selon une autre technique, le polyester est mis en oeuvre sous la forme d'une solution dans un solvant organique. La suite des opérations est similaire à celles utilisées pour l'enrobage à l'intervention de polyesters à l'état liquide ou fondu.

Divers solvants organiques peuvent être utilisés à cette fin. Ils sont en général choisis parmi les solvants organiques comportant des groupes aromatiques ou les solvants organiques substitués par des halogènes tels que le chlore et le brome, des groupes nitro, des groupes carbonyles, des groupes carboxyles, des groupes esters et des groupes alkoxy. On peut également utiliser des mélanges de solvants. On peut ainsi utiliser des mélanges des solvants précités entre eux ou avec des alcools. Les solvants sont le plus souvent choisis parmi les composés organiques contenant de 1 à 12 atomes de carbone; quand il s'agit de composés aromatiques leur nombre d'atomes de carbone est de 4 à 12. Les alcools contiennent en général de 1 à 8 atomes de carbone.

De bons résultats ont été obtenus avec des solvants halogénés ou plus particulièrement des solvants chlorés seuls ou en mélange avec des alcools.

Les meilleurs résultats ont été obtenus avec un chlorométhane tel que le chlorure de méthylène seul ou en mélange avec un alcool tel que le méthanol.

Les solutions de polyesters peuvent contenir des quantités variables de polyesters. En général, pour des raisons économiques, on utilise des solutions dont la concentration est égale à, ou voisine de, la saturation. De bons résultats sont obtenus avec des solutions contenant de 10 à 60 % de leur poids de polyesters.

La présente invention concerne également l'utilisation des compositions en particules selon l'invention.

Les compositions en particules selon l'invention peuvent être utilisées comme molluscicides et plus particulièrement comme agents contre les gastéropodes tels que les limaces et les gastéropodes qui servent d'hôtes intermédiaires à certains parasites de l'homme ou des animaux et notamment les Planorbes et les Limnées tels que ceux qui servent d'hôtes intermédiaires aux trématodes à un stade quelconque de leur développement.

Pour ce faire, les compositions sont épandues sur les surfaces infestées par toutes méthodes connues en elles-mêmes telles que l'épandage manuel ou mécanique.

Les doses à mettre en oeuvre sont fonction de l'agent molluscicide utilisé et de l'agent pathogène à éliminer.

Dans le cas de l'emploi de compositions en particules à base de métaldéhyde pour l'élimination des limaces on épand en général de 50 à 5000 g de particules à l'hectare.

Afin d'illustrer l'invention sans pour autant en limiter la portée, on donne ci-après des exemples pratiques de réalisation.

Exemples 1 et 2R

6 g de métaldéhyde sont intimement broyés avec 67 g de farine de froment dans un mixer. 27 g de poly-caprolactone CAPA 220 commercialisée par INTEROX sont chauffés à 55-60°C pour les rendre liquides et versés dans le mixer en fonctionnement contenant la farine et le métaldéhyde jusqu'à formation de granules d'environ 1 mm de diamètre.

Les granules ainsi obtenus se sont révélés être très efficaces contre les limaces et très attractifs. Leur durée d'action a atteint 10 jours.

A titre de comparaison un essai a été réalisé avec des granules du commerce de 3 mm de diamètre contenant 6 % en poids de métaldéhyde. Leur durée d'action a été de 1 à 3 jours.

-10-

R E V E N D I C A T I O N S

1 - Compositions sous forme de particules solides contenant au moins un agent molluscicide caractérisées en ce qu'elles contiennent en outre au moins un polyester.

2 - Compositions selon la revendication 1 caractérisées en ce qu'elles contiennent un polymère de la ε-caprolactone.

3 - Compositions selon les revendications 1 ou 2 caractérisées en ce qu'elles contiennent du métaldéhyde comme agent molluscicide.

4 - Compositions selon l'une quelconque des revendications 1 à 3 caractérisées en ce qu'elles contiennent en outre un support solide.

5 - Compositions selon la revendication 4 caractérisées en ce que le support solide est choisi parmi les farines et les sons de céréales.

6 - Compositions selon l'une quelconque des revendications 1 à 5 caractérisées en ce qu'elles contiennent de 0,1 à 60 % en poids d'agents molluscicides, de 0,1 à 70 % en poids de polyester et de 1 à 90 % en poids de support solide.

7 - Procédé pour l'obtention de compositions selon l'une quelconque des revendications 1 à 6 caractérisé en ce qu'on enrobe l'agent molluscicide sous forme solide avec le polyester à l'état liquide ou fondu.

8 - Procédé pour l'obtention de compositions selon l'une quelconque des revendications 1 à 6 caractérisé en ce qu'on enrobe l'agent molluscicide sous forme solide avec une solution du polyester dans un solvant organique.

9 - Procédé selon l'une ou l'autre des revendications 7 et 8 caractérisé en ce qu'on incorpore simultanément un support solide à la composition.

10 - Procédé pour éliminer les mollusques caractérisé en ce qu'on épand sur les surfaces infestées les compositions selon l'une quelconque des revendications 1 à 6.

Office européen
des brevets

**RAPPORT DE RECHERCHE EUROPEENNE**

EP  84 20 1770

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENTS ABSTRACTS OF JAPAN, vol. 7, no. 28 (C-149)[1173], 4 février 1983, page 162C149; & JP - A - 57 185 344 (DAICEL K.K.) 15-11-1982 * Abrégé * | 1-10 | A 01 N   25/10 A 01 N   35/02 |
| X | US-A-3 850 863  (R.A. CLENDINNING)) *   Colonne   1,   lignes   15-17; colonne  3, lignes 42-53; colonne 8, lignes 65-68 * | 1-10 | |
| A | FR-A-1 575 437  (BP CHEMICALS) * Résumé * | 1-10 | |

DOMAINES TECHNIQUES
RECHERCHES (Int. Cl.4)

A 01 N

Le présent rapport de recherche a été établi pour toutes les revendications

| Lieu de la recherche | Date d'achèvement de la recherche | Examinateur |
|---|---|---|
| LA HAYE | 14-03-1985 | DECORTE D. |